# FASCICULE DE BREVET EUROPEEN

(11) **EP 4 313 625 B1**
(45) Date de publication et mention de la délivrance du brevet: **07.05.2025**
(21) Numéro de dépôt: 22715130.5
(22) Date de dépôt: 21.03.2022
(51) Int. Cl.: B60C 9/00, C08L 7/00, B60C 1/00, D07B 1/06

(54) **COMPOSITE COMPRENANT UN ÉLÉMENT DE RENFORT MÉTALLIQUE ET UNE COMPOSITION ÉLASTOMÉRIQUE COMPRENANT UNE RÉSINE PROMOTRICE D'ADHÉSION**
VERBUNDSTOFF, BESTEHEND AUS EINEM METALLISCHEN VERSTÄRKUNGSELEMENT UND EINER ELASTOMEREN ZUSAMMENSETZUNG, DIE EIN HAFTVERMITTELNDES HARZ ENTHÄLT
COMPOSITE COMPRISING A METAL REINFORCEMENT ELEMENT AND AN ELASTOMERIC COMPOSITION COMPRISING AN ADHESION PROMOTING RESIN

(30) Priorité: 29.03.2021 FR 2103178
(43) Date de publication de la demande: 07.02.2024
(73) Titulaire: COMPAGNIE GENERALE DES ETABLISSEMENTS MICHELIN, 63000 Clermont-Ferrand (FR)
(72) Inventeur: THUILLIEZ, Anne-Lise, 63040 CLERMONT-FERRAND Cedex 9 (FR); GAVARD-LONCHAY, Odile, 63040 CLERMONT-FERRAND Cedex 9 (FR); LE CLERC, Christophe, 63040 CLERMONT-FERRAND Cedex 9 (FR); LETESSIER, Julien, 63040 CLERMONT-FERRAND Cedex 9 (FR)
(74) Mandataire: M.F.P. Michelin
(86) Numéro de dépôt international: PCT/FR2022/050512
(87) Numéro de publication internationale: WO 2022/207998

(56) Documents cités:
- EP-B1- 3 102 645
- FR-A1- 3 041 647
- FR-A1- 3 089 987
- US-A- 5 284 713
- US-A1- 2018 362 754

## Description

### Domaine technique de l'invention

La présente invention est relative au domaine des produits en caoutchouc renforcés, en particulier à destination des bandages pneumatiques ou non pneumatiques, ainsi qu'aux articles comprenant de tels produits renforcés.

### Art antérieur

Les nappes de renforcement des bandages pneumatiques ou des articles renforcés en caoutchouc comprennent habituellement une composition de caoutchouc, dite de calandrage, et des câbles de renforcement métalliques. La composition de calandrage doit répondre à de nombreuses caractéristiques, telles que de bonnes propriétés d'adhésion aux câbles de renforcement métalliques, des propriétés hystérétiques conférant aux nappes une faible contribution à la résistance au roulement ainsi qu'une bonne résistance à la fissuration et ce, tout au long de la vie du pneumatique.

L'adhésion entre les câbles métalliques et le caoutchouc environnant est une des propriétés clés pour l'efficacité des nappes de renforcement des bandages pneumatiques ou des articles renforcés en caoutchouc. Les compositions de calandrage, qui comprennent un élastomère diénique, notamment du caoutchouc naturel, une charge renforçante, comprennent également en général un système de vulcanisation spécifique et, en tant que promoteur d'adhésion, des sels de cobalt. Ce système de vulcanisation spécifique comprend usuellement un taux de soufre élevé, un ratio massique oxyde de zinc sur acide stéarique élevé, un accélérateur de vulcanisation dit lent et un retardateur de vulcanisation. Dans ces systèmes, l'adhésion entre la composition de calandrage et le câble métallique se crée via le phénomène de sulfuration de la surface laitonnée du câble, les sels de cobalt ayant une action sur la pérennité de l'adhésion.

De nombreux travaux ont été réalisés par les manufacturiers de bandages pneumatiques pour limiter les teneurs en soufre, en oxyde métallique et/ou en sels de cobalt tout en maintenant une ou plusieurs des performances des compositions de calandrage, ainsi que leur pérennité. Ainsi, les documents WO2016/058942 et WO2016/0589431 proposent de gainer les éléments de renfort métallique, permettant d'abaisser les taux de soufre et d'oxyde de zinc dans les compositions de calandrage des renforts ainsi gainés et de diminuer, voire de supprimer le cobalt de la composition de calandrage. Toutefois, cette approche nécessite de gainer les éléments de renfort.

Le document EP 3 476 624 enseigne un composite comprenant une composition élastomérique et un élément de renfort dont la surface comprend du laiton et de 1 à 10% poids d'un ou plusieurs métaux choisis parmi le cobalt, le nickel, l'étain, l'indium, le manganèse, le fer, le bismuth et le molybdène. Les exemples montrent que des compositions élastomériques comprenant une résine promotrice d'adhésion (système résorcinol/ Hexa(methoxymethyl)mélamine, noté H3M) et ne comprenant pas de sels de cobalt, présentent une bonne tenue dans le temps des propriétés d'adhésion.

Toutefois, la combinaison de l'H3M avec un composé phénolique tel que le résorcinol, dont on cherche par ailleurs à limiter l'usage du fait de son impact HSE, produit du formaldéhyde au cours de la cuisson de la composition de caoutchouc. Aussi, de nombreux travaux visent à remplacer ce système accepteur/donneur de méthylène par un système présentant un impact environnemental moins élevé. Le document WO2017/103404 montre par exemple l'exemple d'une composition de caoutchouc pouvant être utilisée pour le calandrage d'éléments de renforts comportant un système phloroglucinol/1,4-benzene-dicarboxaldéhyde utilisé à des taux élevés pour rigidifier la composition de caoutchouc. Ce document n'adresse pas la problématique de l'adhésion aux éléments de renfort. Les documents US 2018/362754 et FR 3 041 647 divulguent un composite comprenant un élément de renfort noyé dans une composition élastomérique à base d'au moins un élastomère diénique, une charge renforçante, un système de réticulation au soufre, et une résine phénol-aldéhyde à base d'un polyphénol aromatique et d'un composé dialdéhyde.

Poursuivant ses recherches, la demanderesse a découvert un composite comprenant au moins un élément de renfort présentant une surface comprenant un alliage de cuivre, de zinc, ledit élément de renfort étant noyé dans une composition élastomérique à base d'au moins un élastomère diénique, une charge renforçante, un système de réticulation au soufre, et une résine phénol-aldéhyde à base :
- d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées, et
- d'au moins un composé dialdéhyde comprenant deux fonctions aldéhydes,
dans lequel la teneur en résine phénol-aldéhyde est inférieure à 10 pce, de préférence inférieure à 6 pce.

### Description détaillée de l'invention

L'invention est telle que définie dans le jeu de revendications joint.

### Définitions

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Composite

L'invention concerne un composite comprenant au moins un élément de renfort présentant une surface comprenant un alliage de cuivre, de zinc, ledit élément de renfort étant noyé dans une composition élastomérique.

Par l'expression composite "comprenant au moins un élément de renfort, ledit renfort étant noyé dans une composition élastomérique", il faut entendre un composite comprenant l'élément de renfort et ladite composition, la composition ayant pu réagir avec la surface de l'élément de renfort lors des différentes phases de fabrication du composite, en particulier au cours de la réticulation de la composition ou au cours de la confection du composite avant réticulation de la composition, ledit élément de renfort étant totalement recouvert de ladite composition.

Ledit élément de renfort est un élément filaire. Il peut être tout ou partie métallique. Par élément filaire, on entend un élément présentant une longueur au moins 10 fois plus grande que la plus grande dimension de sa section, quelle que soit la forme de cette dernière : circulaire, elliptique, oblongue, polygonale, notamment rectangulaire ou carrée ou ovale. Dans le cas d'une section rectangulaire, l'élément filaire présente la forme d'une bande.

Ledit élément de renfort comprend une surface métallique.

La surface métallique de l'élément de renfort constitue au moins une partie, et préférentiellement la totalité de la surface dudit élément et est destinée à entrer directement au contact de la composition élastomérique. De préférence, l'élément de renfort est métallique, c'est-à-dire constitué d'un matériau métallique. Préférentiellement, l'élément de renfort est un élément de renfort en acier revêtu d'une surface métallique telle que définie dans la présente.

L'acier de l'élément de renfort en acier est préférentiellement un acier au carbone ou un acier inoxydable. Lorsque l'acier est un acier au carbone, sa teneur en carbone, exprimée en % poids, est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% poids de chrome et au moins 50% poids de fer.

L'élément de renfort présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la composition élastomérique dans laquelle l'élément de renfort est noyé, et un allègement de la composition élastomérique ainsi renforcée.

La composition élastomérique enrobe la totalité de l'élément de renfort, à l'exception éventuelle des plans de coupes du composite.

Préférentiellement, la surface métallique de l'élément de renfort comprend de 55 à 75% poids de cuivre.

Certains métaux étant sujets à l'oxydation au contact de l'air ambiant, le métal peut être en partie oxydé.

Selon un mode de réalisation préféré, le composite est un produit renforcé qui comprend plusieurs éléments de renforts tels que définis ci-dessus et une composition élastomérique de calandrage dans laquelle sont noyés les éléments de renforts, la composition élastomérique de calandrage consistant en la composition élastomérique du composite selon l'invention. Selon ce mode de réalisation, les éléments de renforts sont agencés généralement côte à côte selon une direction principale. Pour une application envisagée dans un bandage pneumatique, le composite peut donc constituer une armature de renforcement pour bandage pneumatique.

Le composite conforme à l'invention peut être à l'état cru (avant réticulation de la composition élastomérique) ou à l'état cuit (après réticulation de la composition élastomérique). Le composite est cuit après mise en contact du ou des éléments de renfort avec la composition élastomérique décrite dans la présente.

Le composite peut être fabriqué par un procédé qui comprend les étapes suivantes :
- Réaliser deux couches de la composition élastomérique du composite selon l'invention,
- Prendre le ou les éléments de renfort en sandwich dans les deux couches en le(s) déposant entre les deux couches,
- Le cas échéant cuire le composite.

Alternativement, le composite peut être fabriqué en déposant l'élément de renfort sur une portion d'une couche, la couche est alors repliée sur elle-même pour couvrir l'élément de renfort qui est ainsi pris en sandwich sur toute sa longueur ou une partie de sa longueur.

La réalisation des couches peut se faire par calandrage. Au cours de la cuisson du composite, la composition élastomérique est réticulée.

Lorsque le composite est destiné à être utilisé en tant qu'armature de renforcement dans un bandage pneumatique, la cuisson du composite a lieu généralement lors de la cuisson du bandage pneumatique.

### Élastomères diéniques

Le composite selon l'invention comprend une composition élastomérique à base d'au moins un élastomère diénique. Par élastomère du type diénique, on rappelle que doit être entendu un élastomère qui est issu au moins en partie (i.e. un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15% (% en moles)). Les élastomères diéniques compris dans la composition selon l'invention sont préférentiellement essentiellement insaturés.

On entend particulièrement par élastomère diénique susceptible d'être utilisé dans les compositions conformes à l'invention :
a) tout homopolymère d'un monomère diène, conjugué ou non, ayant de 4 à 18 atomes de carbone ;
b) tout copolymère d'un diène, conjugué ou non, ayant de 4 à 18 atomes de carbone et d'au moins un autre monomère.

L'autre monomère peut être l'éthylène, une oléfine ou un diène, conjugué ou non.

À titre de diènes conjugués conviennent les diènes conjugués ayant de 4 à 12 atomes de carbone, en particulier les 1,3-diènes, tels que notamment le 1,3-butadiène et l'isoprène.

À titre d'oléfines conviennent les composés vinylaromatiques ayant de 8 à 20 atomes de carbone et les α-monooléfines aliphatiques ayant de 3 à 12 atomes de carbone.

À titre de composés vinylaromatiques conviennent par exemple le styrène, l'ortho-, méta-, para-méthylstyrène, le mélange commercial "vinyle-toluène", le para-tertiobutylstyrène.

À titre d'α-monooléfines aliphatiques conviennent notamment les α-monooléfines aliphatiques acycliques ayant de 3 à 18 atomes de carbone.

L'élastomère diénique est de préférence un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères d'éthylène-butadiène (EBR) et les mélanges de tels copolymères.

Les élastomères diéniques ci-dessus peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation, par exemple époxydés.

De manière préférée, la composition élastomérique du composite selon l'invention comprend au moins 50 pce, préférentiellement au moins 70 pce, de manière préférée au moins 90 pce d'au moins un élastomère isoprénique. Dans un mode très préféré, la composition élastomérique du composite selon l'invention comprend 100 pce d'au moins un élastomère isoprénique.

Par "élastomère isoprénique", on entend un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène, en particulier les copolymères d'isoprène-styrène (SIR), d'isoprène-butadiène (BIR) ou d'isoprène-butadiène-styrène (SBIR), et les mélanges de ces élastomères.

De manière préférée, l'élastomère isoprénique est choisi dans le groupe constitué par les polyisoprènes de synthèse, le caoutchouc naturel, les copolymères d'isoprène et leurs mélanges, de préférence dans le groupe constitué par le caoutchouc naturel, les polyisoprènes comprenant un taux massique de liaisons cis 1,4 d'au moins 90%, plus préférentiellement d'au moins 98% par rapport à la masse d'élastomère isoprénique et leurs mélanges. De manière très préférée, l'élastomère isoprénique est le caoutchouc naturel.

### Charge renforçante

La composition élastomérique du composite selon l'invention comprend une charge renforçante. On peut utiliser tout type de charge renforçante connue pour ses capacités à renforcer une composition élastomérique utilisable pour la fabrication de bandages pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçant des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0,1 à 0,3].

Par "charge inorganique renforçante", doit être entendu dans la présente demande, par définition, toute charge inorganique ou minérale (quelle que soit sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceux, en particulier de la silice (SiO₂), ou du type alumineux, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. À titre de silices précipitées hautement dispersibles (dites "HDS"), on citera par exemple les silices « Ultrasil 7000 » et « Ultrasil 7005 » de la société Degussa, les silices « Zeosil 1165MP », « 1135MP » et « 1115MP » de la société Rhodia, la silice « Hi-Sil EZ150G » de la société PPG, les silices « Zeopol 8715 », « 8745 » et « 8755 » de la Société Huber, les silices à haute surface spécifique telles que décrites dans la demande WO 03/16837.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, la composition élastomérique du composite selon l'invention comprend de 10 à 100 pce, plus préférentiellement de 10 à 80 pce et de manière préférée de 10 à 60 pce de noir de carbone, l'optimum étant de manière connue différent selon les applications particulières visées : le niveau de renforcement attendu sur un bandage pneumatique vélo, par exemple, est bien sûr inférieur à celui exigé sur un bandage pneumatique apte à rouler à grande vitesse de manière soutenue, par exemple un pneu moto, un pneu pour véhicule de tourisme ou pour véhicule utilitaire tel que Poids lourd. Dans un arrangement préféré, la charge renforçante comprend majoritairement du noir de carbone, et de préférence est constituée de noir de carbone.

De manière préférentielle, la composition élastomérique du composite selon l'invention comprend de 10 à 150 pce, de préférence de 10 à 100 pce de silice. Dans un arrangement préféré, la charge renforçante comprend majoritairement de la silice et de préférence est constituée de silice.

Pour coupler la charge inorganique renforçante à l'élastomère, on peut de manière optionnelle utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes, ou des polyorganosiloxanes bifonctionnels.

On peut utiliser notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C2H5O)3Si(CH2)3S2]2 ou le disulfure de bis-(triéthoxysilylpropyle), en abrégé TESPD, de formule [(C2H5O)3Si(CH2)3S]2. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet US 2004/132880.

A titre d'agent de couplage autre qu'alkoxysilane polysulfuré, on citera notamment des POS (polyorganosiloxanes) bifonctionnels ou encore des polysulfures d'hydroxysilane tels que décrits dans les demandes de brevet WO 02/30939 et WO 02/31041, ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions élastomériques conformes à l'invention, la teneur en agent de couplage est préférentiellement dans un domaine allant de 5 à 18% en poids par rapport à la quantité de silice, préférentiellement dans un domaine allant de 8 à 12% en poids par rapport à la quantité de silice.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, permettant d'établir la liaison entre la charge et l'élastomère en présence ou non d'un agent de recouvrement ou de couplage.

### Système de réticulation

La composition élastomérique du composite selon l'invention comprend un système de réticulation à base de soufre comprenant un oxyde métallique, un dérivé de l'acide stéarique et un accélérateur de vulcanisation. On parle alors d'un système de vulcanisation. Le soufre peut être apporté sous toute forme, notamment sous forme de soufre moléculaire, ou d'un agent donneur de soufre.

Le soufre est utilisé à un taux préférentiellement compris entre 1 et 5 pce, en particulier allant de 1 à 4 pce. Ce taux, bien que faible par rapport aux compositions de calandrage usuelles, est suffisant dans le cadre de l'invention pour assurer à la fois une bonne réticulation de la composition élastomérique et une adhésion suffisante et pérenne à l'élément de renfort métallique.

L'accélérateur de vulcanisation est utilisé à un taux préférentiel tel que le ratio massique soufre/accélérateur de vulcanisation est inférieur ou égal à 5, de préférence inférieur ou égal à 4.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

Le ratio massique oxyde métallique sur dérivé de l'acide stéarique dans le système de réticulation est préférentiellement inférieur à 3. L'oxyde métallique est préférentiellement l'oxyde de zinc.

Le système de réticulation peut également éventuellement comprendre un retardateur de vulcanisation.

### Résine phénol-aldéhyde

Conformément à l'invention, la composition élastomérique du composite selon l'invention est à base d'une résine phénol-aldéhyde à base :
- d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées, et
- d'au moins un composé dialdéhyde comprenant deux fonctions aldéhydes.

De manière préférée, la teneur en résine phénol-aldéhyde dans la composition élastomérique du composite selon l'invention est inférieure à 10 pce, de préférence inférieure à 6 pce. Par teneur en résine phénol-aldéhyde, on entend la somme des teneurs en polyphénol aromatique et en composé aldéhyde à base de la résine phénol-aldéhyde. Ces taux permettent à la résine de jouer son rôle de promoteur d'adhésion sans modifier notablement la rigidité du mélange.

### Polyphénol aromatique

Dans un mode de réalisation, le polyphénol aromatique peut être une molécule simple comprenant un ou plusieurs noyaux aromatiques, au moins un de ces noyaux aromatiques, voire chaque noyau aromatique, étant porteur d'au moins deux fonctions hydroxyle en position méta l'une par rapport à l'autre, les deux positions ortho d'au moins une des fonctions hydroxyle étant non substituées. Une telle molécule simple ne comprend pas de motif répétitif.

Dans un autre mode de réalisation, le polyphénol aromatique peut être une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé dialdéhyde comprenant deux fonctions aldéhydes.

Une telle résine pré-condensée à base de polyphénol aromatique est conforme à l'invention et comprend, contrairement à la molécule simple décrite ci-dessus, un motif répétitif. En l'espèce, le motif répétitif comprend au moins un noyau aromatique porteur d'au moins deux fonctions hydroxyle en position méta l'une par rapport à l'autre.

Dans un autre mode de réalisation, le polyphénol aromatique est un mélange d'un polyphénol aromatique formant une molécule simple et d'une résine pré-condensée à base de polyphénol aromatique.

Dans les modes de réalisation particuliers qui suivent, on décrit le ou les noyaux aromatiques du polyphénol aromatique. Par souci de clarté, on y décrit le « polyphénol aromatique » sous sa forme de molécule simple. Ce polyphénol aromatique pourra ensuite être condensé et définira en partie le motif répétitif.

Dans un mode de réalisation préféré, le noyau aromatique du polyphénol aromatique est porteur de trois groupes -O-H en position méta les uns par rapport aux autres.

De préférence, les deux positions ortho de chaque groupe -O-H du polyphénol aromatique sont non substituées. On entend par là que les deux atomes de carbone situés de part et d'autre (en position ortho) de l'atome de carbone porteur du groupe -O-H sont porteurs d'un simple atome d'hydrogène.

Encore plus préférentiellement, le reste du noyau aromatique du polyphénol aromatique est non substitué. On entend par là que les autres atomes de carbone du reste du noyau aromatique (ceux autres que les atomes de carbone porteurs des groupes -0-H) sont porteurs d'un simple atome d'hydrogène.

Dans un mode de réalisation, le polyphénol aromatique comprend plusieurs noyaux aromatiques, au moins deux d'entre eux étant chacun porteur d'au moins deux groupes -O-H en position méta l'un par rapport à l'autre, les deux positions ortho d'au moins un des groupes -O-H d'au moins un noyau aromatique étant non substituées.

Dans un mode de réalisation préféré, au moins un des noyaux aromatiques du polyphénol aromatique est porteur de trois groupes -O-H en position méta les uns par rapport aux autres.

De préférence, les deux positions ortho de chaque groupe -O-H d'au moins un noyau aromatique sont non substituées.

Encore plus préférentiellement, les deux positions ortho de chaque groupe -O-H de chaque noyau aromatique sont non substituées.

Avantageusement, le ou chaque noyau aromatique du polyphénol aromatique est un noyau benzénique.

A titre d'exemple de polyphénol aromatique comportant un seul noyau aromatique, on peut citer en particulier, le résorcinol et le phloroglucinol, de formules respectives **I** et **II** :

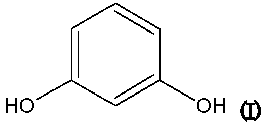

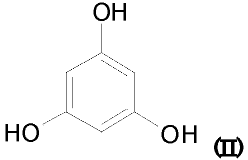

À titre d'exemples, dans le cas où le polyphénol aromatique comporte plusieurs noyaux aromatiques, au moins deux de ces noyaux aromatiques, identiques ou différents, sont choisis parmi ceux de formules générales: 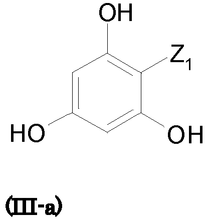 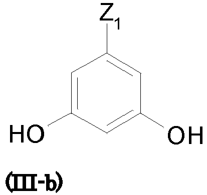 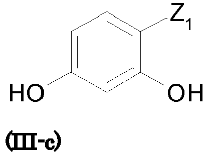 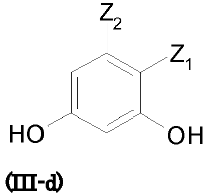 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste du polyphénol aromatique.

Un autre exemple de polyphénol aromatique est le 2,2',4,4'-tétrahydroxydiphényl sulfide, ayant la formule suivante :

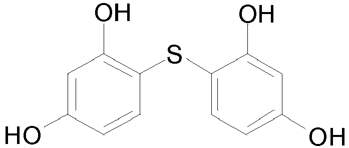

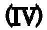

Un autre exemple de polyphénol aromatique est la 2,2',4,4'-tétrahydroxydiphényl benzophénone, de formule suivante :

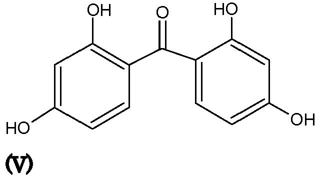

On note que chaque composé **IV** et **V** est un polyphénol aromatique comportant deux noyaux aromatiques (de formules **III-c**) dont chacun est porteur d'au moins deux (en l'occurrence de deux) groupes -O-H en position méta l'un par rapport à l'autre.

On note que dans le cas d'un polyphénol aromatique comportant au moins un noyau aromatique conforme à la formule **III-b**, les deux positions ortho de chaque groupe -O-H d'au moins un noyau aromatique sont non substituées. Dans le cas d'un polyphénol aromatique comportant plusieurs noyaux aromatiques conformes à la formule **III-b**, les deux positions ortho de chaque groupe -O-H de chaque noyau aromatique sont non substituées.

Selon un mode de réalisation de l'invention, le polyphénol aromatique est choisi dans le groupe constitué par le résorcinol **I**, le phloroglucinol **II**, le 2,2',4,4'-tétrahydroxydiphényl sulfide **IV**, la 2,2',4,4'-tétrahydroxybenzophenone **V** et les mélanges de ces composés. Dans un mode de réalisation particulièrement avantageux, le polyphénol aromatique est le phloroglucinol **II**.

### Composé dialdéhyde

De manière préférée, le composé dialdéhyde est un composé dialdéhyde aromatique. Un tel aldéhyde est très avantageux car il permet d'éviter la production de formaldéhyde contrairement aux donneurs de méthylène classiques. Un dialdéhyde aromatique est un composé comprenant au moins un noyau aromatique, ce noyau aromatique portant au moins deux fonction aldéhyde.

Dans un arrangement préféré, le composé dialdéhyde aromatique est un aldéhyde de formule **A :** 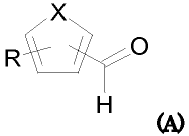 dans laquelle X comprend N, S ou O et R représente -CHO.

Selon un mode de réalisation préférentiel, X représente O. Le composé dialdéhyde aromatique est alors de formule **Bb**:

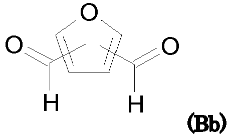

Dans ce mode de réalisation, le composé dialdéhyde aromatique est préférentiellement le 2,5-furanedicarboxaldéhyde.

Dans un autre mode de réalisation préférentiel, X comprend N. Dans une variante de ce mode de réalisation, X représente NH. Le composé dialdéhyde aromatique est alors de formule **Ca**:

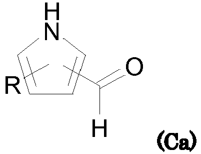

De manière préférée, dans cette variante, le composé dialdéhyde aromatique est le 2,5-1H-pyrroledicarboxaldéhyde.

Dans une autre variante de ce mode de réalisation, X représente NR1 avec R1 représentant un radical choisi dans le groupe constitué par les radicaux alkyle, aryle arylalkyle, alkylaryle, cycloalkyle. Le composé dialdéhyde aromatique est alors de formule **Cb**:

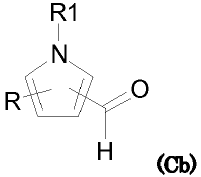

Dans un autre mode de réalisation préférentiel, X comprend S. Dans une variante de ce mode de réalisation, X représente S et le composé dialdéhyde aromatique est alors de formule **Da**:

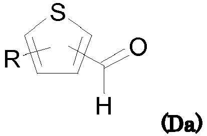

De manière préférée, dans cette variante, le composé dialdéhyde aromatique est le 2,5-thiophènedicarboxaldéhyde.

Dans une autre variante de ce mode de réalisation, X représente SR2 avec R2 représentant un radical choisi dans le groupe constitué par les radicaux alkyle, aryle arylalkyle, alkylaryle, cycloalkyle. Le composé dialdéhyde aromatique est alors de formule **Db**:

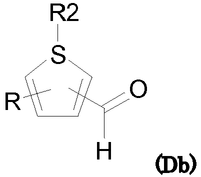

Dans une autre variante de ce mode de réalisation, X représente R3-S-R2 avec R2, R3 représentant chacun indépendamment l'un de l'autre un radical choisi dans le groupe constitué par les radicaux alkyle, aryle arylalkyle, alkylaryle, cycloalkyle. Le composé dialdéhyde aromatique est alors de formule **Dc** :

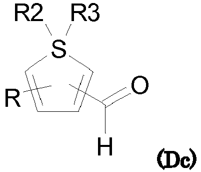

Dans une autre variante de ce mode de réalisation, X représente S=O. Le composé dialdéhyde aromatique est alors de formule **Dd:**

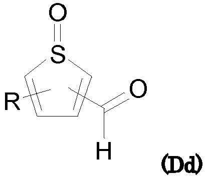

Dans une autre variante de ce mode de réalisation, X représente O=S=O. Le composé dialdéhyde aromatique est alors de formule **De:**

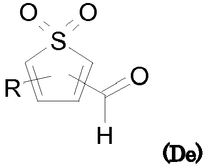

Parmi les différents modes de réalisation décrits ci-dessus, on préfèrera les modes de réalisation et les variantes dans lesquels X représente NH, S ou O. Dans ces modes de réalisation et variantes, on aura préférentiellement R, qui représente le groupe -CHO, en position 5 et le groupe -CHO en position 2 sur le noyau aromatique.

Très préférentiellement, l'aldéhyde aromatique est choisi dans le groupe constitué par le 1,4-benzène-dicarboxaldéhyde, le 1,3-benzène-dicarboxaldéhyde, le 2,5-furanedicarboxaldéhyde et les mélanges de ces composés, et très préférentiellement le 1,4-benzène-dicarboxaldéhyde.

### Additifs divers

La composition élastomérique du composite selon l'invention peut également comprendre tout ou partie des additifs usuels habituellement utilisés dans les compositions d'élastomères destinées à la fabrication de bandages pneumatiques, comme par exemple des plastifiants ou des huiles d'extension, que ces derniers soient de nature aromatique ou non-aromatique, des pigments, des agents de protection tels que cires anti-ozone, anti-ozonants chimiques, antioxydants, des agents anti-fatigue.

De manière préférée, la composition élastomérique du composite selon l'invention ne comprend pas de sels de cobalt ou en comprend moins de 1 pce, de manière préférée moins de 0,5 pce.

Ainsi, les caractéristiques spécifiques de la composition élastomérique et de la surface métallique du composite selon l'invention permettent d'atteindre et de maintenir d'excellentes performances, en terme notamment d'adhésion, de pertes hystérétiques et de résistance à la fissuration.

### Article fini ou semi-fini et pneumatique

L'invention a également pour objet un article fini ou semi-fini comprenant un composite selon l'invention. L'article fini ou semi-fini peut être tout article comprenant un composite. On peut citer par exemple et de manière non limitative les bandes transporteuses, bandages pneumatiques ou non pneumatiques.

Le bandage pneumatique, autre objet de l'invention, a pour caractéristique essentielle de comprendre le composite conforme à l'invention. Le bandage pneumatique peut être à l'état cru (avant réticulation de la composition élastomérique) ou à l'état cuit (après réticulation de la composition élastomérique). Généralement, au cours de la fabrication du bandage pneumatique, le composite est déposé à l'état cru (c'est-à-dire avant réticulation de la composition élastomérique) dans la structure du bandage pneumatique avant l'étape de cuisson du bandage pneumatique.

L'invention concerne particulièrement des bandages pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd », c'est-à-dire métro, bus, engins de transport routier (camions, tracteurs, remorques), véhicules hors-la-route tels qu'engins agricoles ou de génie civil, et autres.

### Exemples

### Préparation des éprouvettes

On procède pour les essais qui suivent de la manière suivante : on introduit dans un mélangeur interne (taux de remplissage final : environ 70% en volume), dont la température initiale de cuve est d'environ 60 °C, successivement, l'élastomère diénique, la charge renforçante ainsi que les divers autres ingrédients à l'exception du système de vulcanisation et de l'HMT ou du terephtaldéhyde lorsqu'une résine est présente dans la composition. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur (sulfénamide), et l'HMT ou le téréphtaldéhyde lorsqu'une résine est présente dans la composition, sur un mélangeur (homo-finisseur) à 30 °C, en mélangeant le tout (phase productive) pendant un temps approprié (par exemple entre 5 et 12 min).

Les compositions ainsi obtenues sont ensuite calandrées sous la forme de plaques (épaisseur de 2 à 3 mm) ou de feuilles fines de caoutchouc puis sont soit soumises à une étape de cuisson à 150°C pendant 15 min avant la mesure de leurs propriétés physiques ou mécaniques soit utilisées pour confectionner les éprouvettes de mesure pour les tests d'adhésion, comme décrit ci-dessous.

### Méthodes de mesures

### Test d'adhésion

Les compositions élastomériques ainsi préparées sont utilisées pour confectionner un composite sous la forme d'une éprouvette selon le protocole détaillé ci-après.

Le composite métal/ caoutchouc utilisé dans ce test est un bloc de composition élastomérique, constitué de deux plaques de dimension 200 mm par 4,5 mm (millimètres) et d'épaisseur 3,5 mm, appliquées l'une sur l'autre avant la cuisson ; l'épaisseur du bloc résultant est alors de 7 mm. C'est lors de la confection de ce bloc que les renforts, par exemple au nombre de quinze, sont emprisonnés entre les deux plaques crues ; seule une longueur de renfort déterminée, par exemple de 4,5 mm, est laissée libre pour venir au contact de la composition élastomérique à laquelle cette longueur de renfort se liera pendant la cuisson ; le reste de la longueur des renforts est isolé de la composition élastomérique (par exemple à l'aide d'un film plastique ou métallique) pour empêcher toute adhésion en dehors de la zone de contact déterminée. Chaque renfort traverse le bloc de caoutchouc de part en part, au moins une de ses extrémités libres étant conservée de longueur suffisante (au moins 5 cm, par exemple entre 5 et 10 cm) pour permettre la traction ultérieure du renfort.

Chaque renfort métallique est constitué de 2 fils d'acier à 0,7% de carbone, de 30/100è millimètres de diamètre retordus ensemble. Le revêtement évalué est un revêtement dit « laiton » comprenant 63% de cuivre et le reste en zinc.

Le bloc comportant les quinze renforts est alors placé dans un moule adapté puis cuit pendant 15 minutes à 150°C, sous une pression d'environ 15 bar.

Après cuisson du bloc, on applique les conditions de vieillissement accéléré qui suivent, permettant de déterminer la résistance des échantillons à l'action combinée de la chaleur et de l'humidité : les blocs de caoutchouc sont placés dans une étuve à une température de 55°C, pendant 14 jours et sous une humidité relative de 95%.

### Mesure des forces d'arrachement

A l'issue de la cuisson et du vieillissement décrit ci-dessus, le bloc est découpé en éprouvettes servant d'échantillons, contenant chacune un renfort que l'on tractionne hors du bloc de caoutchouc, à l'aide d'une machine de traction selon la méthode décrite dans la norme ASTM D 2229-02 ; la vitesse de traction est de 100 mm/min ; on caractérise ainsi l'adhérence par la force nécessaire pour arracher le renfort hors de l'éprouvette, à température ambiante ; la force d'arrachement représente la moyenne des 15 mesures correspondant aux 15 renforts du composite.

Plus la valeur de la force est élevée, plus l'adhésion entre le câble et la composition élastomérique est grande. Les résultats sont exprimés en base 100 par rapport à l'éprouvette témoin non vieillie de composition C01 pour les mélanges ne comprenant que du noir de carbone en tant que charge renforçante, et de composition C09 pour les mélanges comprenant de la silice. Une valeur supérieure à celle de l'éprouvette témoin non vieillie, arbitrairement fixée à 100, indique un résultat amélioré, c'est-à-dire une force d'arrachement supérieure à celle de l'éprouvette témoin non vieillie.

### Évaluation des pertes hystérétiques

La résistance au roulement induite par la composition testée est estimée par la mesure des pertes d'énergie, à une température de 60°C, de l'énergie restituée au sixième rebond d'un échantillon auquel on a imposé une énergie initiale, telle que décrite dans la norme DIN 53-512 d'avril 2000. Cette mesure est calculée comme suit : P60(%)=100(E0- E1)/E0, où E0 représente l'énergie initiale et E1 l'énergie restituée. Les éprouvettes sont testées après cuisson et après un vieillissement accéléré à 77°C pendant 14 jours et 21 jours dans une enceinte ventilée.

Les résultats sont exprimés en base 100 par rapport à l'éprouvette témoin non vieillie de composition C01 pour les mélanges ne comprenant que du noir de carbone en tant que charge renforçante, et de composition C09 pour les mélanges comprenant de la silice. Une valeur supérieure à celle de l'éprouvette témoin non vieillie, arbitrairement fixée à 100, indique un résultat dégradé, c'est-à-dire une perte hystérétique (valeur de P60) supérieure à celle de l'éprouvette témoin non vieillie.

### Test de résistance à la propagation des fissures

La vitesse de fissuration a été mesurée sur des éprouvettes des compositions élastomériques C01 à C16, à l'aide d'une machine de fatigue cyclique (« Elastomer Test System ») du type 381, de la société MTS, comme expliqué ci-après.

La résistance à la fissuration est mesurée à l'aide de tractions répétées sur une éprouvette initialement accommodée (après un premier cycle de traction), puis entaillée. L'éprouvette de traction est constituée par une plaque de caoutchouc de forme parallélépipédique, par exemple d'épaisseur comprise entre 0,5 et 1,5 mm, de longueur entre 60 et 100 mm et de largeur entre 4 et 8 mm, les deux bords latéraux étant chacun recouverts dans le sens de la longueur d'un bourrelet de caoutchouc cylindrique (diamètre 5 mm) permettant l'ancrage dans les mors de la machine de traction. Les éprouvettes ainsi préparées sont testées après cuisson et après un vieillissement accéléré dans une étuve à 77°C pendant 14 jours et 21 jours dans une enceinte ventilée. Le test a été conduit à l'air, à une température de 60°C. Après accommodation, 4 entailles très fines de longueur comprise entre 5 et 7 mm sont réalisées à l'aide d'une lame de rasoir, à mi-largeur et alignées dans le sens de la longueur de l'éprouvette, une à chaque extrémité et deux situées de part et d'autre du centre de l'éprouvette, avant le démarrage du test. A chaque cycle de traction, le taux de déformation de l'éprouvette est ajusté automatiquement de manière à maintenir constant le taux de restitution d'énergie (quantité d'énergie libérée lors de la progression de la fissure), à une valeur égale à environ 1000 J/m2. La vitesse de propagation de fissure est mesurée en nanomètre par cycle.

Les résultats sont exprimés en base 100 par rapport à l'éprouvette témoin non vieillie de composition C01 pour les mélanges ne comprenant que du noir de carbone en tant que charge renforçante, et de composition C09 pour les mélanges comprenant de la silice. Une valeur supérieure à celle de l'éprouvette non vieillie, arbitrairement fixée à 100, indique un résultat dégradé, c'est-à-dire une vitesse de propagation de fissure supérieure à celle de l'éprouvette témoin non vieillie. Lorsque l'éprouvette casse, la mention « nm » pour « non mesurable » est indiquée. Cette mention témoigne d'une éprouvette présentant une faible résistance à la propagation de fissures.

### Essais de traction

Les essais ont été effectués conformément à la norme française NF T 46-002 de septembre 1988. Toutes les mesures de traction ont été effectuées dans les conditions normales de température (23±2°C) et d'hygrométrie (50±5% d'humidité relative), selon la norme française NF T 40-101 (décembre 1979).

On a mesuré en seconde élongation (c'est-à-dire après accommodation) le module sécant nominal calculé en se ramenant à la section initiale de l'éprouvette (ou contrainte apparente, en MPa) à 10% d'allongement noté MA10, sur des échantillons cuits 15 minutes à 150°C.

Les résultats sont exprimés en base 100, la valeur 100 étant attribuée au témoin. Un résultat supérieur à 100, indique que la composition de l'exemple considéré présente une plus forte rigidité que le témoin.

### Résultats

Les tableaux ci-dessous montrent les résultats de mesures réalisées sur les mélanges C01 à C16. Les mélanges C01 à C08 ne comprennent que du noir de carbone en tant que charge renforçante. Les mélanges C09 à C16 ne comprennent que de la silice en tant que charge renforçante.

Ces exemples montrent que les mélanges conformes à l'invention présentent un excellent compromis de performance adhésion/propriétés hystérétiques/résistance à la propagation de fissures et une adhésion améliorée lorsque le support est conforme à l'invention.

**[Tableau 1]**

| Compositions **(pce)** | **C01** | **C02** | **C03** | **C04** | **C05** | **C06** | **C07** | **C08** |
|---|---|---|---|---|---|---|---|---|
| NR | 100 | 100 | 100 | 100 | 100 | 100 | 100 | 100 |
| N347 | 50 | 50 | 50 | 50 | 50 | 50 | 50 | 50 |
| 6-PPD | 2 | 2 | 2 | 2 | 9 | 2 | 2 | 2 |
| Acide Stearique | 0.5 | 0.5 | 0.5 | 0.5 | 1.5 | 1.5 | 1.5 | 1.5 |
| ZnO | 8 | 8 | 8 | 8 | 4 | 4 | 4 | 4 |
| *ZnO*/*Ac.Stearoque* | *16* | *16* | *16* | *16* | 2.7 | 2.7 | 2.7 | 2.7 |
| Sels de Cobalt | 1 | 1 | 1 | - | - | - | - | - |
| TBBS | 1.5 | 1.5 | 1.5 | 1.5 | 1 | 1 | 0.75 | 0.75 |
| Soufre | 6 | 6 | 6 | 6 | 4 | 4 | 3 | 3 |
| Resorcinol | | 1 | | | | | | |
| HMT | | 0.5 | | | | | | |
| Phloroglucinol | | | 1 | 1 | | 1 | | 1 |
| Terephtaldehyde | | | 2 | 2 | | 2 | | |

| **Résultats de mesure - Base 100** | | | | | | | | |
|---|---|---|---|---|---|---|---|---|
| **Rigidité** | | | | | | | | |
| MA10 (23°C) | 100 | 139 | 94 | 79 | 77 | 63 | 64 | 55 |

| **Adhésion revêtement "ternaire" - Vieillissement à 55°C et 95%HR** | | | | | | | | |
|---|---|---|---|---|---|---|---|---|
| T=0 j | 100 | 96 | 93 | 96 | 111 | 106 | 99 | 106 |
| T=14 j | 59 | 35 | 62 | 58 | 85 | 91 | 97 | 98 |

| **Adhésion revêtement "laiton" - Vieillissement à 55°C et 95%HR** | | | | | | | | |
|---|---|---|---|---|---|---|---|---|
| T=0 j | 100 | 104 | 96 | 101 | 108 | 100 | 110 | 94 |
| T=14 j | 35 | 23 | 51 | 47 | 41 | 65 | 41 | 77 |

| **Hystérèse - Vieillissement à 77°C sous air** | | | | | | | | |
|---|---|---|---|---|---|---|---|---|
| T=0 j | 100 | 114 | 121 | 102 | 97 | 96 | 100 | 113 |
| T=14 j | 118 | 124 | 136 | 112 | 102 | - | 104 | - |
| T=21 j | 132 | 124 | 142 | 118 | 111 | - | 110 | - |

| **Fissuration - Vieillissement à 77°C sous air - G=1000 J/m²** | | | | | | | | |
|---|---|---|---|---|---|---|---|---|
| T=0 | 100 | 47 | 3 | 3 | 14 | 3 | 5 | 5 |
| T=14j | 3081 | nm | 1889 | 332 | 382 | - | 8 | - |
| T=21j | nm | nm | nm | nm | 752 | - | 10 | - |

| | | | | | | | | |
|---|---|---|---|---|---|---|---|---|
| - : non mesuré ; nm : non mesurable | | | | | | | | |

**[Tableau 2]**

| **Compositions (pce)** | **C09** | **C10** | **C11** | **C12** | **C13** | **C14** | **C15** | **C16** |
|---|---|---|---|---|---|---|---|---|
| NR | 100 | 100 | 100 | 100 | 100 | 100 | 100 | 100 |
| N347 | | | | | | | | |
| Silice 160MP | 45 | 45 | 45 | 45 | 45 | 45 | 45 | 45 |
| Silane | 6.5 | 8.5 | 8.5 | 8.5 | 8.5 | 8.5 | 8 | 8 |
| DPG | 1 | 1 | 1 | 1 | 1 | 1 | 1.25 | 1.25 |
| 6-PPD | 2 | 2 | 2 | 2 | 2 | 2 | 2 | 2 |
| Acide Stéarique | 0.5 | 0.5 | 0.5 | 0.5 | 0.5 | 0.5 | 1.5 | 1.5 |
| ZnO | 8 | 8 | 8 | 8 | 8 | 8 | 4 | 4 |
| *ZnO*/*Ac. Stéarique* | *16* | *16* | *16* | *16* | 16 | *16* | *2.7* | *2.7* |
| Sels de Cobalt | 1 | 1 | 1 | - | - | - | - | - |
| TBBS | 1.5 | 1.5 | 1.5 | 1.5 | 1.5 | 1.5 | 1.5 | 1.5 |
| Soufre | 6 | 6 | 6 | 6 | 6 | 6 | 2 | 2 |
| Resorcinol | | 1 | | | 1 | | | |
| HMT | | 0.5 | | | 0.5 | | | |
| Phloroplucinol | | | 1 | | | 1 | | 1 |
| Terephtaldéhyde | | | 2 | | | 2 | | 2 |

| **Résultats de mesure - Base 100** | | | | | | | | |
|---|---|---|---|---|---|---|---|---|
| **Rigidité** | | | | | | | | |
| MA10 (23°C) | 100 | 103 | 93 | 108 | 129 | 82 | 56 | 56 |

| **Adhésion revètement "ternaire" - Vieillissement à 55°C et 95%HR** | | | | | | | | |
|---|---|---|---|---|---|---|---|---|
| T=0j | 100 | 105 | 114 | 91 | 100 | 105 | 38 | 99 |
| T=14j | 61 | 38 | 77 | 45 | 29 | 64 | 27 | 93 |

| **Hystérese - Vieillissement à 77°C sous air** | | | | | | | | |
|---|---|---|---|---|---|---|---|---|
| T=0j | 100 | 125 | 122 | 92 | 125 | 100 | 75 | 110 |
| T=14 j T=21 j | 125 125 | 131 132 | 141 144 | 106 105 | 129 127 | 116 119 | 37 92 | - - |

| **Fissuration - Vieillissement à 77°C sous air - G=1000 J/m²** | | | | | | | | |
|---|---|---|---|---|---|---|---|---|
| T=0 | 100 | 156 | 20 | 491 | 538 | 51 | 10 | 10 |
| T=14j | 21238 | 53115 | 5701 | nm | nm | 324 | - | |
| T=21j | nm | nm | nm | nm | nm | 284 | - | - |

| | | | | | | | | |
|---|---|---|---|---|---|---|---|---|
| - : non mesuré ; nm : non mesurable | | | | | | | | |

## Revendications

1. Composite comprenant au moins un élément de renfort présentant une surface comprenant un alliage de cuivre, de zinc, ledit élément de renfort étant noyé dans une composition élastomérique à base d'au moins un élastomère diénique, une charge renforçante, un système de réticulation au soufre, et une résine phénol-aldéhyde à base :
- d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées, et
- d'au moins un composé dialdéhyde comprenant deux fonctions aldéhydes,
dans lequel la teneur en résine phénol-aldéhyde est inférieure à 10 pce, de préférence inférieure à 6 pce.

2. Composite selon la revendication précédente dans lequel le composé dialdéhyde comprend au moins un noyau aromatique, éventuellement substitué.

3. Composite selon la revendication précédente dans lequel les deux positions méta d'au moins une fonction aldéhyde sont non substituées.

4. Composite selon l'une des deux revendications précédentes dans lequel le composé dialdéhyde est choisi parmi les composés comprenant un noyau aromatique à 6 atomes de carbone, préférentiellement choisi parmi le 1,4-benzène-dicarboxaldéhyde et le 1,3-benzène-dicarboxaldéhyde.

5. Composite selon l'une quelconque des revendications précédentes dans lequel le système de réticulation comprend un oxyde métallique, un dérivé de l'acide stéarique et un accélérateur de vulcanisation, la teneur en soufre étant comprise entre 1 et 5 pce, et le ratio massique oxyde métallique sur dérivé de l'acide stéarique étant inférieur à 3.

6. Composite selon l'une quelconque des revendications précédentes dans lequel la surface de l'élément de renfort comprend de 55 à 75% poids de cuivre.

7. Composite selon l'une quelconque des revendications précédentes dans lequel la composition élastomérique comprend au moins 50 pce, préférentiellement au moins 70 pce, de manière préférée au moins 90 pce d'au moins un élastomère isoprénique, et très préférentiellement 100 pce d'au moins un élastomère isoprénique.

8. Composite selon l'une quelconque des revendications précédentes dans lequel la composition élastomérique comprend de 1 à 4 pce de soufre.

9. Composite selon l'une quelconque des revendications précédentes dans lequel le ratio massique soufre/accélérateur de vulcanisation est inférieur ou égal à 5, de préférence inférieur ou égal à 4.

10. Composite selon l'une quelconque des revendications précédentes dans lequel la composition élastomérique ne comprend pas de sels de cobalt ou en comprend moins de 1 pce, de manière préférée moins de 0,5 pce.

11. Composite selon l'une quelconque des revendications précédentes dans lequel la charge renforçante de la composition élastomérique comprend majoritairement du noir de carbone.

12. Composite selon l'une quelconque des revendications 1 à 10 dans lequel la charge renforçante de la composition élastomérique comprend majoritairement de la silice.

13. Composite selon la revendication précédente dans lequel la composition élastomérique comprend un agent de couplage de la silice, la teneur en agent de couplage étant dans un domaine allant de 5 à 18% en poids par rapport à la quantité de silice, préférentiellement dans un domaine allant de 8 à 12% en poids par rapport à la quantité de silice.

14. Article fini ou semi-fini comprenant un composite selon l'une quelconque des revendications précédentes.

15. Bandage pneumatique comprenant un composite selon l'une quelconque des revendications 1 à 13.

## Patentansprüche

1. Verbundstoff, umfassend mindestens ein Verstärkungselement, das eine Oberfläche aufweist, die eine Legierung aus Kupfer, Zink umfasst, wobei das Verstärkungselement eingebettet ist in eine Elastomerzusammensetzung auf Basis mindestens eines Dienelastomers, eines verstärkenden Füllstoffs, eines Schwefelvernetzungssystems und eines Phenol-Aldehyd-Harzes auf Basis:
- mindestens eines aromatischen Polyphenols, das mindestens einen aromatischen Kern umfasst, der mindestens zwei Hydroxylfunktionen in meta-Position zueinander trägt, wobei die beiden ortho-Positionen mindestens einer der Hydroxylfunktionen unsubstituiert sind, und
- mindestens einer Dialdehydverbindung, die zwei Aldehydfunktionen umfasst,
wobei der Gehalt an Phenol-Aldehyd-Harz weniger als 10 phe, bevorzugt weniger als 6 phe beträgt.

2. Verbundstoff nach dem vorhergehenden Anspruch, wobei die Dialdehydverbindung mindestens einen aromatischen Kern umfasst, gegebenenfalls substituiert.

3. Verbundstoff nach dem vorhergehenden Anspruch, wobei die beiden meta-Positionen mindestens einer Aldehydfunktion unsubstituiert sind.

4. Verbundstoff nach einem der beiden vorhergehenden Ansprüche, wobei die Dialdehydverbindung aus den Verbindungen ausgewählt ist, die einen aromatischen Kern mit 6 Kohlenstoffatomen umfassen, bevorzugt aus dem 1,4-Benzoldicarboxaldehyd und dem 1,3-Benzoldicarboxaldehyd ausgewählt ist.

5. Verbundstoff nach einem der vorhergehenden Ansprüche, wobei das Vernetzungssystem ein Metalloxid, ein Stearinsäurederivat und einen Vulkanisationsbeschleuniger umfasst, wobei der Schwefelgehalt zwischen 1 und 5 phe beträgt und wobei das Massenverhältnis Metalloxid zu Stearinsäurederivat kleiner als 3 ist.

6. Verbundstoff nach einem der vorhergehenden Ansprüche, wobei die Oberfläche des Verstärkungselements 55 bis 75 Gew.-% Kupfer umfasst.

7. Verbundstoff nach einem der vorhergehenden Ansprüche, wobei die Elastomerzusammensetzung mindestens 50 phe, bevorzugt mindestens 70 phe, vorzugsweise mindestens 90 phe mindestens eines Isoprenelastomers und besonders bevorzugt 100 phe mindestens eines Isoprenelastomers umfasst.

8. Verbundstoff nach einem der vorhergehenden Ansprüche, wobei die Elastomerzusammensetzung 1 bis 4 phe Schwefel umfasst.

9. Verbundstoff nach einem der vorhergehenden Ansprüche, wobei das Massenverhältnis Schwefel/Vulkanisationsbeschleuniger kleiner als oder gleich 5, bevorzugt kleiner als oder gleich 4 ist.

10. Verbundstoff nach einem der vorhergehenden Ansprüche, wobei die Elastomerzusammensetzung keine Kobaltsalze umfasst oder weniger als 1 phe, vorzugsweise weniger als 0,5 phe davon umfasst.

11. Verbundstoff nach einem der vorhergehenden Ansprüche, wobei der verstärkende Füllstoff der Elastomerzusammensetzung mehrheitlich Ruß umfasst.

12. Verbundstoff nach einem der Ansprüche 1 bis 10, wobei der verstärkende Füllstoff der Elastomerzusammensetzung mehrheitlich Siliciumdioxid umfasst.

13. Verbundstoff nach dem vorhergehenden Anspruch, wobei die Elastomerzusammensetzung ein Siliciumdioxid-Kopplungsmittel umfasst, wobei der Kopplungsmittelgehalt in einem Bereich von 5 bis 18 Gew.-% bezogen auf die Siliciumdioxidmenge, vorzugsweise in einem Bereich von 8 bis 12 Gew.-% bezogen auf die Siliciumdioxidmenge liegt.

14. Fertig- oder Halbfertigerzeugnis, umfassend einen Verbundstoff nach einem der vorhergehenden Ansprüche.

15. Luftreifen, umfassend einen Verbundstoff nach einem der Ansprüche 1 bis 13.

## Claims

1. Composite comprising at least one reinforcing element exhibiting a surface comprising an alloy of copper and zinc, said reinforcing element being embedded in an elastomeric composition based on at least a diene elastomer, a reinforcing filler, a sulfur crosslinking system and a phenol/aldehyde resin based:
- on at least one aromatic polyphenol comprising at least one aromatic nucleus bearing at least two hydroxyl functions in the meta position with respect to each other, the two positions ortho to at least one of the hydroxyl functions being unsubstituted, and
- on at least one dialdehyde compound comprising two aldehyde functions,
in which the content of phenol/aldehyde resin is less than 10 phr, preferably less than 6 phr.

2. Composite according to the preceding claim, in which the dialdehyde compound comprises at least one aromatic nucleus, which is optionally substituted.

3. Composite according to the preceding claim, in which the two positions meta to at least one aldehyde function are unsubstituted.

4. Composite according to either of the two preceding claims, in which the dialdehyde compound is chosen from the compounds comprising an aromatic nucleus having 6 carbon atoms, preferentially chosen from 1,4-benzenedicarboxaldehyde and 1,3-benzenedicarboxaldehyde.

5. Composite according to any one of the preceding claims, in which the crosslinking system comprises a metal oxide, a stearic acid derivative and a vulcanization accelerator, the sulfur content being between 1 and 5 phr, and the ratio by weight of metal oxide to stearic acid derivative being less than 3.

6. Composite according to any one of the preceding claims, in which the surface of the reinforcing element comprises from 55% to 75% by weight of copper.

7. Composite according to any one of the preceding claims, in which the elastomeric composition comprises at least 50 phr, preferentially at least 70 phr, preferably at least 90 phr, of at least one isoprene elastomer and very preferentially 100 phr of at least one isoprene elastomer.

8. Composite according to any one of the preceding claims, in which the elastomeric composition comprises from 1 to 4 phr of sulfur.

9. Composite according to any one of the preceding claims, in which the sulfur/vulcanization accelerator ratio by weight is less than or equal to 5, preferably less than or equal to 4.

10. Composite according to any one of the preceding claims, in which the elastomeric composition does not comprise cobalt salts or comprises less than 1 phr, preferably less than 0.5 phr, thereof.

11. Composite according to any one of the preceding claims, in which the reinforcing filler of the elastomeric composition predominantly comprises carbon black.

12. Composite according to any one of Claims 1 to 10, in which the reinforcing filler of the elastomeric composition predominantly comprises silica.

13. Composite according to the preceding claim, in which the elastomeric composition comprises an agent for coupling the silica, the content of coupling agent being in a range extending from 5% to 18% by weight, with respect to the amount of silica, preferentially in a range extending from 8% to 12% by weight, with respect to the amount of silica.

14. Finished or semi-finished article comprising a composite according to any one of the preceding claims.

15. Pneumatic tyre comprising a composite according to any one of Claims 1 to 13.
